# EUROPEAN PATENT APPLICATION

(11) **EP 4 714 310 A1**
(43) Date of publication of application: **25.03.2026**
(21) Application number: 25159346.3
(22) Date of filing: 21.02.2025
(51) Int. Cl.: A47J 31/30, A47J 31/44

(54) **MOKA COFFEE MAKER WATER CHAMBER WITH FINS OR BLADES OR PROTRUSIONS**

(30) Priority: 24.09.2024 US 202463698060 P
(71) Applicant: Frontini, Matteo, 20138 Milano (IT)
(72) Inventor: Frontini, Matteo, 20138 Milano (IT)
(74) Representative: Maccalli, Marco

(57) **Abstract**

A design for the water chamber of the Moka coffee maker where blades spiral up and around the side wall of the chamber, where fins are perpendicular to the base of the water chamber and protrude vertically from the side wall, where protrusions spiral up and around the side wall of the water chamber, as each protrusion is slightly offset in one direction from the protrusion directly below it, or where a sleeve can be retrofitted and slid over a conventional Moka coffee maker water chamber, wherein the sleeve has blades, fins or protrusions. Such kind of water chamber or sleeve improves the thermal absorption properties of the Moka coffee maker and reduces the coffee preparation time, especially when a gas stove is used. An application of the fin heat exchange thermodynamic principle to the Moka Coffee water chamber.

## Description

### BACKGROUND OF THE INVENTION

### Field of invention:

The present invention relates to an improvement of a conventional gas stove Moka Coffee Maker, hereinafter named the Turbo Moka Coffee Maker or the Fan Coffee Maker. The proposed Turbo Moka Coffee Maker has a water chamber design which optimizes the heat exchange between the flame and water inside the water chamber. This leads to a substantial decrease in coffee making time and use of less gas.

### Description of the related art:

Conventional gas stove Moka coffee makers use heat to force hot water through the coffee mix and a filter to create a beverage.

When using gas stoves to make coffee with the conventional Moka coffee maker, there are multiple heat transfer mechanisms at work to heat the water and produce the beverage. First, the flame transfers heat to the metal water chamber, then the metal chamber transfers heat to the water, the pressure inside the water chamber increases and forces water through the coffee mix to produce the beverage.

In the case of household gas stoves, the blue gas flame is the heat source and it can reach temperatures up to 1500 degrees Celsius. The flame's thermal energy is exchanged via thermal radiation but also via convection by warming up gases in the proximity of the flame to very high temperatures, which transfer heat to the metal body that is in contact with the hot gas. With known designs of gas stoves and Moka coffee makers, thermal radiation emitted from the flame is transferred efficiently to the bottom of the Moka water chamber. However, most of the heat contained in the hot gas is not efficiently transferred via convection as much of the heat travels sideways of the Moka coffee maker and then upwards where it is lost to the environment.

### PROBLEM TO BE SOLVED

It is the object of the present invention to optimize the transfer of heat from the flame to the water. It is a further aim to provide an improved Moka water chamber that maintains the thermal radiation absorption properties of the traditional Moka coffee maker but also increases the absorption capabilities of heat transfer from the hot gases created by the flame via convection.

According to the present invention, the above object is solved with a water chamber having the features of any one of claims 1 to 3, and with a sleeve having the features of claim 9. Further embodiments are defined in the dependent claims.

According to a first aspect, a water chamber for a Moka coffee maker has a base and a side wall and comprises linear or non-linear blades that spiral up and around the side wall of the water chamber.

According to a second aspect, a water chamber for a Moka coffee maker has a base and a side wall and comprises linear fins that are perpendicular to the base of the water chamber and protrude radially from the side wall.

According to a third aspect, a water chamber for a Moka coffee maker has a base and a side wall and comprises coned or column style protrusions that protrude from the side wall and are arranged along a path that spirals up and around the side wall of the water chamber, wherein each protrusion is arranged offset in a circumferential direction of the water chamber from the protrusion directly below it.

The heat generated by a gas stove flame is transferred via radiation and convection to the water chamber of the Moka coffee maker. The heat transferred via radiation is maximized by getting the base of the Moka coffee maker as close as possible to the blue flame of the gas stove. The heat transferred via heat convection is maximized by increasing the contact area of the surface of the Moka water chamber and the hot gas created by the flame. Adding fins, blades and protrusions to the side of the Moka water chamber increases the contact area between the hot gas created by the flame and Moka water chamber. Furthermore, the spiral shape of the blades and the arrangement of the protrusions decelerate the flow of hot air and increase the thermally active surface of the blades and the protrusions with respect to the height of the water chamber along which the blades and the protrusions are provided. Tests conducted with different embodiments have shown that there is a reduction in water boiling time and thus gas use of approximately 30%.

The design of the water chamber has improved thermal energy absorption capabilities from the flame of conventional gas stove and reduces waiting time and energy consumption for the production of the coffee beverages.

The design lowers the time it takes for the water inside the Moka coffee maker to reach high temperatures and thus saves time and gas. Given the increase in cost of household gas, this translates to lower bills but also emissions from fossil fuel combustion.

Preferably, the linear or non-linear fins or blades that protrude from the side wall, at least protrude 1 mm outwardly from the centre of the cylindrical body of the water chamber, to increase the surface area.

Preferably, the coned or column style protrusions protrude from the side wall, at least protrude 1 mm outwardly from the water chamber, to increase the surface area.

Preferably, the water chamber has a thread, which makes it possible to screw the water chamber into the top part of the Moka coffee maker, for connecting the water chamber with the Moka coffee maker. It is not limited to this connection via thread, alternatives are also possible e.g. clamps or tension fasteners.

Preferably, the water chamber mentioned above has a hole on the side of water chamber for a pressure release valve.

Preferably, the water chamber has a flat base. It provides a secure stand and offers a larger contact surface for heat transfer, even when using an electric hotplate or induction stove.

Preferably, the water chamber has a circular or polygonal cylindrical body or a polygonal shape that contains the water.

According to a fourth aspect of the invention, a sleeve is adapted to be retrofit and slid over a non-finned Moka coffee maker water chamber, the sleeve having a side wall and comprising linear or non-linear blades that spiral up and around the side wall of the sleeve.

According to a fifth aspect of the invention, a sleeve is adapted to be retrofit and slide over a non-finned Moka coffee maker water chamber, the sleeve having a side wall and comprising linear fins that are perpendicular to the base of the water chamber and protrude radially from the side wall of the sleeve.

According to a sixth embodiment, a sleeve is adapted to be retrofit and slide over a non-finned Moka coffee maker water chamber, the sleeve having a side wall and comprising coned or column style protrusions that spiral up and around the side wall of the water chamber, wherein each protrusion is offset in a circumferential direction of the sleeve from the protrusion directly below it.

According to a seventh embodiment, a sleeve will have an opening in order to allow flexibility in the sleeve structure. This flexibility is needed to slide the sleeve over the classic moka water chamber without having to remove the pressure valve.

The sleeve allows the use a conventional Moka coffee maker while obtaining the same benefits as those explained for the first to third aspect of the present invention.

According to all seven aspects, the heat transfer time to transfer the heat from the flame to the water inside the Moka coffee maker is reduced, and this results in lower gas consumption and shorter waiting times for producing coffee beverages. From an economic perspective, a lower energy use is in the interest of households, this leads to lower utility bills, improving energy efficiency and saving time.

Preferably, the sleeve is made of a metal with higher thermal conductivity than the metal of the Moka coffee maker water chamber. The higher conductivity offers a faster transfer of heat from the flame to the finned sleeve, which in turn can transfer it faster to the water chamber.

Preferably, the inner wall of the sleeve is in physical contact with the Moka coffee maker water chambers outer wall.

Blade, fin or protrusion design, size and numbers present on the side wall of the water chamber can change based on thermodynamic principles, production costs and material costs.

Preferably, the outer surface of the water chamber or of the sleeve is at least 20% larger than the inner surface of the water chamber. As a result, the surface on which the heat of the gas flame can be transmitted to the water chamber via the blades, fins or protrusions provided directly on the water chamber or indirectly on the water chamber via the sleeve is accordingly larger than the surface of the water chamber which can be brought into contact with the water to be heated. Hence, a higher amount of heat can be transmitted from the gas flame via the outer surface of the water chamber or the sleeve to the water inside the water chamber.

### BRIEF DESCRIPTION OF THE DRAWINGS

Fig. 1 shows a first embodiment of a Turbo Moka Water Chamber.
Fig. 2 shows a cross section of the first embodiment.
Fig. 3 shows a top view of the first embodiment.
Fig. 4 shows a side view of the first embodiment.
Fig. 5 shows a bottom view of the first embodiment.

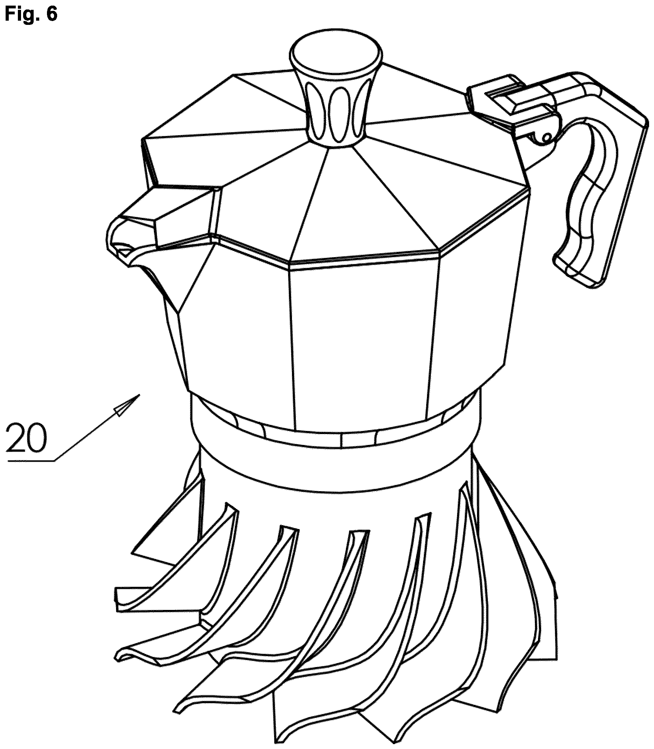

Fig. 6 shows an assembly of a Moka Coffee Maker with water chamber according to the first embodiment.
Fig. 7 shows a front view of the assembly of the Moka Coffee Maker with water chamber according to the first embodiment.
Fig. 8 shows a side view of the assembly of the Moka Coffee Maker with water chamber according to the first embodiment.

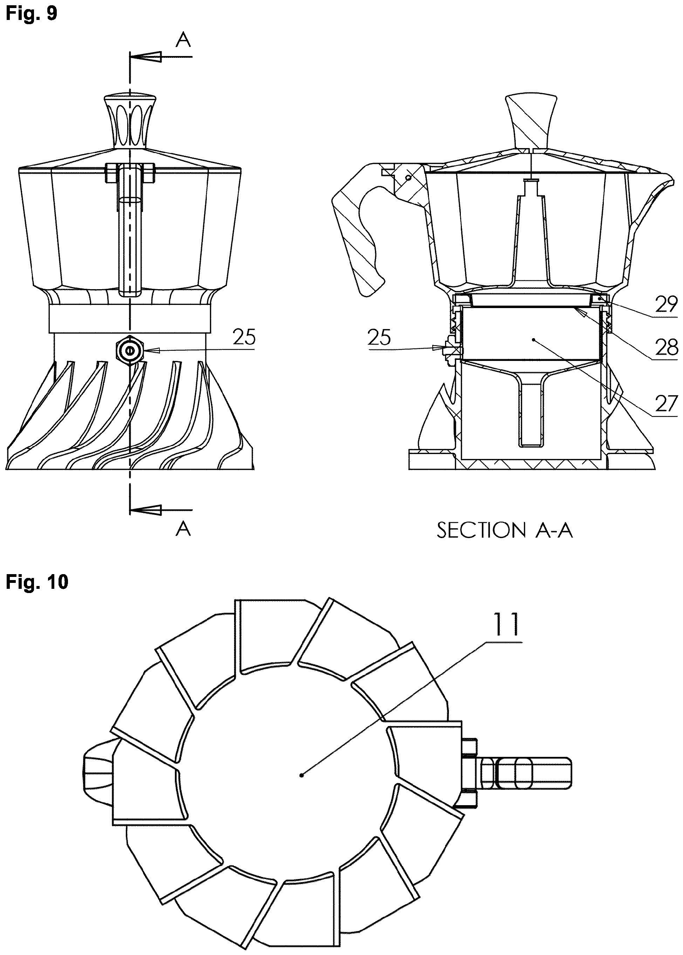

Fig. 9 shows a rear view and a cross section of the assembly of the Moka Coffee Maker with the water chamber according to the first embodiment.
Fig. 10 shows a bottom view of the assembly of the Moka Coffee Maker with water chamber according to the first embodiment.
Fig. 11 shows a top view of the assembly of the Moka Coffee Maker with water chamber according to the first embodiment.
Fig. 12 shows a Turbo Moka Water Chamber with vertical fins according to a second embodiment.
Fig. 13 shows a cross section of the water chamber according to the second embodiment.
Fig. 14 shows a bottom view of the water chamber according to the second embodiment.
Fig. 15 shows a top view of the water chamber according to the second embodiment.
Fig. 16 shows a Turbo Moka Water Chamber with angled fins according to a third embodiment.
Fig. 17 shows a cross section of the water chamber according to a third embodiment.
Fig. 18 shows a top view of the water chamber according to a third embodiment.
Fig. 19 shows a bottom view of the water chamber according to a third embodiment.
Fig. 20 shows a conventional Moka Water Chamber.
Fig. 21 shows a finned sleeve to be retrofit to the classic Moka Water Chamber as a fourth embodiment.
Fig. 22 shows a side view of the sleeve according to the fourth embodiment.
Fig. 23 shows a bottom view of the sleeve according to the fifth embodiment.
Fig. 24 shows an assembly of the sleeve according to the fifth embodiment with the conventional Moka Water Chamber.
Fig. 25 shows a side view of the assembly of the sleeve according to the fifth embodiment with the conventional Moka Water Chamber.
Fig. 26 shows a cross section view of the assembly of the sleeve according to the fifth embodiment with the conventional Moka Water Chamber.
Fig. 27 shows a Turbo Moka Water Chamber with angled fins according to a sixth embodiment.
Fig. 28 shows a top and bottom view of the water chamber according to the sixth embodiment.
Fig. 29 shows a Turbo Moka Water Chamber with angled fins according to a seventh embodiment.
Fig. 30 shows a top and bottom view of the water chamber according to the seventh embodiment.
Fig. 31 shows a finned sleeve to be retrofit to the classic Moka Water Chamber as a eighth embodiment.
Fig. 32 shows a finned sleeve to be retrofit to the classic Moka Water Chamber as a ninth embodiment.
Fig. 33 shows a finned sleeve to be retrofit to the classic Moka Water Chamber as a tenth embodiment.

### DETAILED DESCRIPTION OF THE EMBODIMENTS

In the following, embodiments of the present invention are described with reference to the figures. In these embodiments, the water chamber 51, 61, 71, 81, 95, 96, 85 of the Moka Coffee Maker absorbs thermal radiation of the flame through the water chamber base 11 and absorbs the heat from the hot gases via convection through the fins 15, 31, 41, 83 provided on the side wall 10, 30, 40 of the water chamber 51, 61, 71, 81, 95, 96, 85.

This design of the water chamber according to the invention is optimized to maximize the absorption the heat of the gas stove flame by thermal radiation and convection of the hot gases created by the flame.

### First embodiment

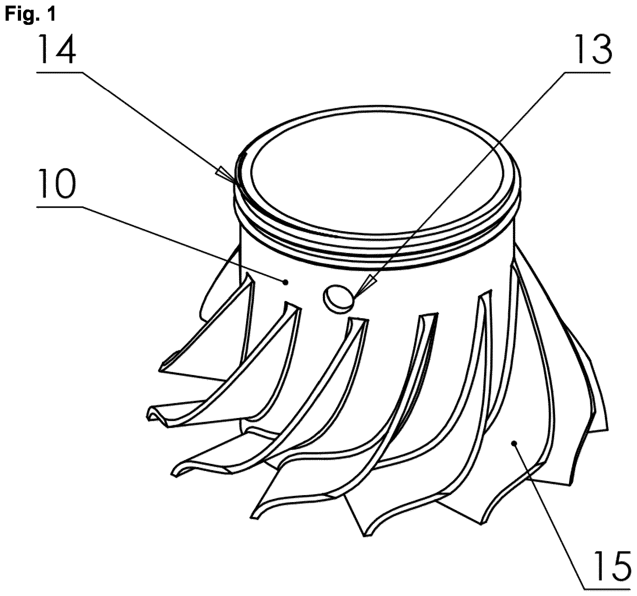

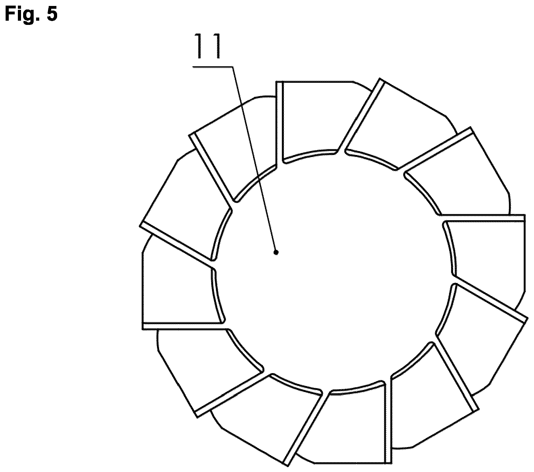

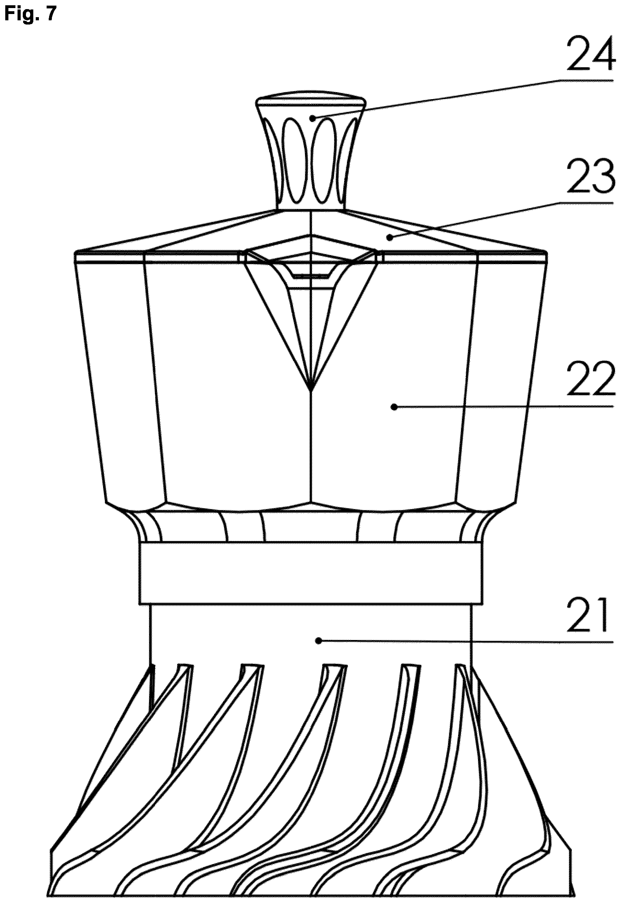

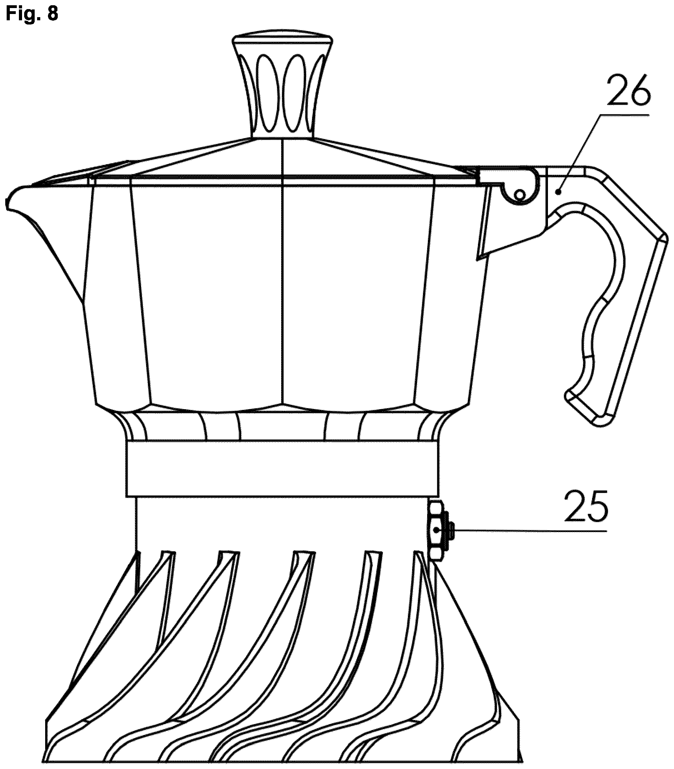

Making reference to Fig. 1, the water chamber 51 according to the first embodiment has a cylindrical body comprising a cylindrical side wall 10 and a circular base 11 (see Fig. 5). A thread 14 is provided on the top of the water chamber 51 to screw into a top part 22 (see Fig. 7) of the Moka coffee maker. A hole 13 is provided in the side wall 10 of the water chamber 51 for accommodating a pressure release valve 25 (see Fig. 8).

The water chamber 51 comprises turbo fan style blades 15 added to the side walls 10 either by welding, casting, injection-molded or extruded by a 5-axis machining operation. These turbo fan blades 15 are optimized for the flow of hot gas. They have a non-linear profile that spirals up and around the cylindrical side wall 10 of the water chamber 51.

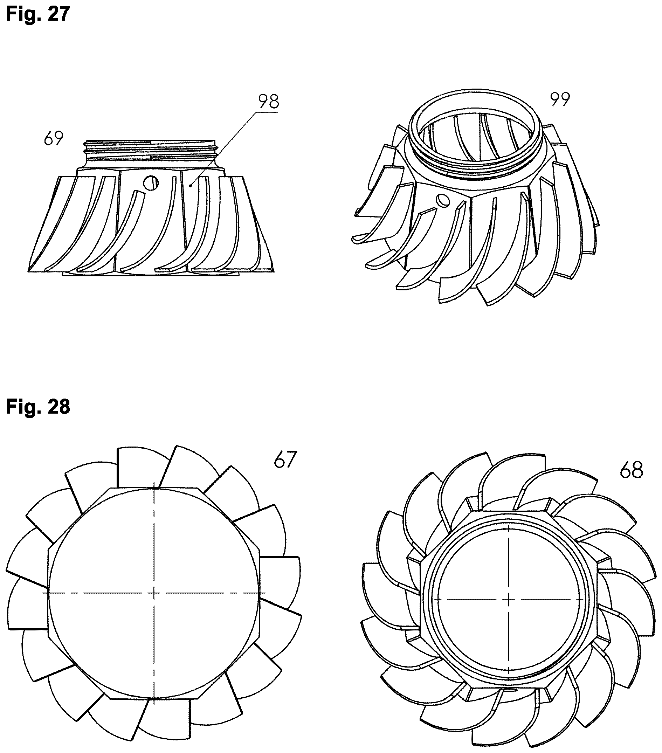

As can be seen in Fig. 7, the lower end of the blades 15 is flush with the base 11. In other words, the blades 15 do neither extend beyond the plane of the base 11 nor do the lower ends thereof have a distance to the base 11. Thus, the blades 15 spiral up from the base 11 towards the thread 14. In the present embodiment, the upper end of the blades is approximately at the lowest point of the hole 13 for accommodating the valve 25. The blades are arranged in a manner that the upper ends thereof do not interfere with the mounting of the valve 25. It is allowed to have longer fins that allow the mounting of the valve as shown in Fig. 27.

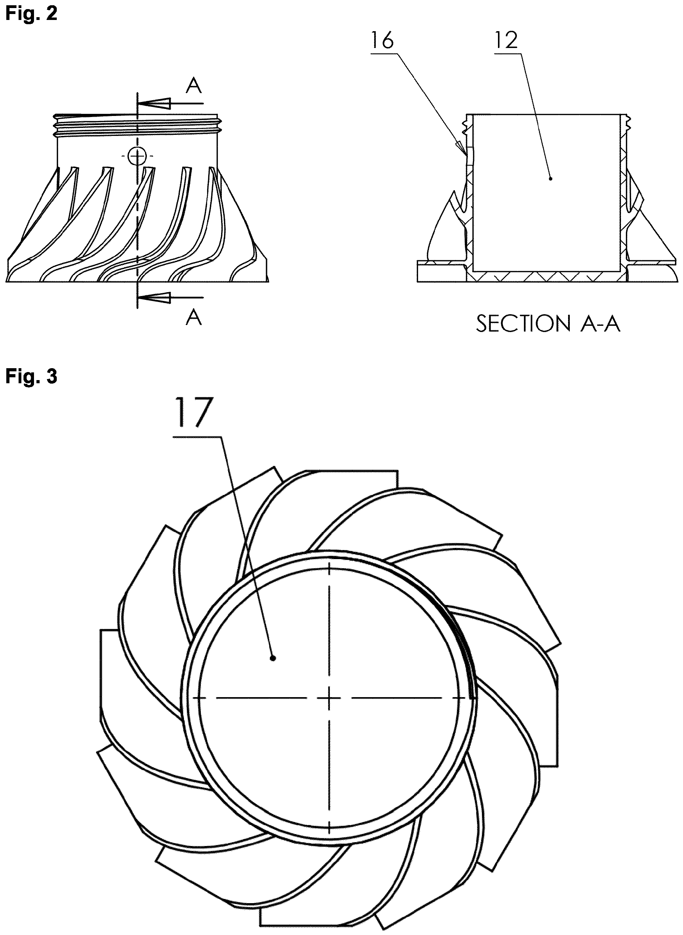

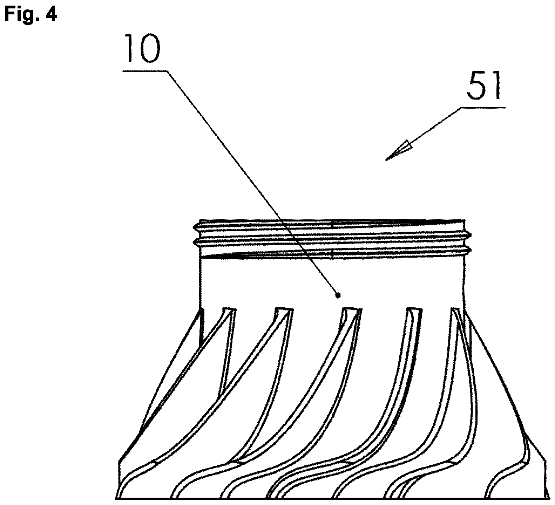

As can be seen in Fig. 3, the lower part of the blades have a linear shape in the top view and the upper part of the blades have a curved shape in the top view. Fig. 4 shows the side view of the water chamber 51 with the blades 15 and it can be seen that the curvature of the blades 15 have a slope with respect to the vertical direction which decreases when starting from the base 11 in the part of the blade 15 which is linear in the top view, and which increases in the part of the blade 15 which is curved in the top view.

Further, the radial extent of the part of the blade which is curved in the top decreases from the part of the blade 15 which is linear in the top view towards the upper end of the blade and is zero at the upper end of the blade. However, in a not shown embodiment, the upper end of the blade could have a radial extent which is larger than zero but smaller than the radial extent of the lower end of the blade.

In the present embodiment, twelve blades 15 are provided on the water chamber 51 but the number thereof is not limited to twelve.

### Second embodiment

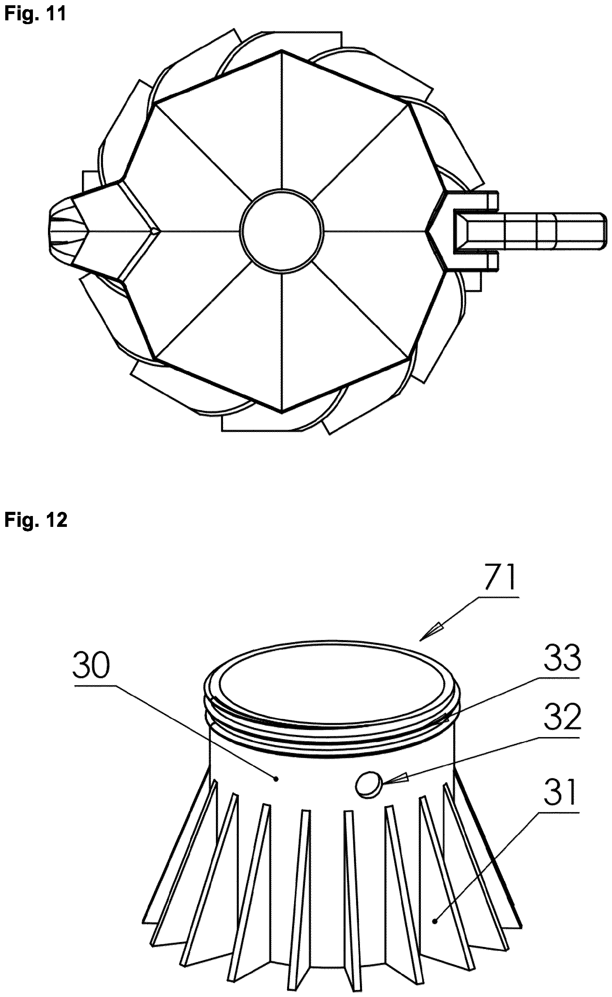

Fig. 12 to 15 show a second embodiment of a water chamber 71 .

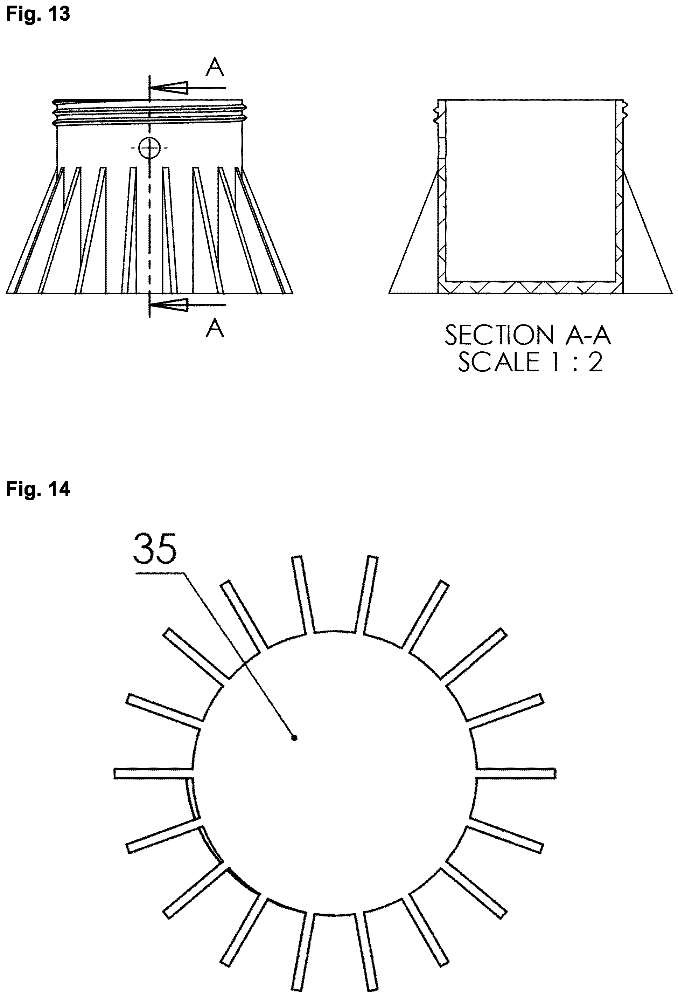

Making reference to Fig. 12, the water chamber 71 according to the second embodiment has a cylindrical body comprising a cylindrical side wall 30 and a circular base 15 (see Fig. 14). A thread 33 is provided on the top of the water chamber 71 to screw into a top part 22 (see Fig. 7) of the Moka coffee maker. A hole 32 is provided in the side wall 30 of the water chamber 71 for accommodating a pressure release valve 25 (see Fig. 8).

The water chamber 71 is provided with fins 31 added to the side wall 30 either by welding, casting, injection-molded or preferably extruded by a 5-axis machining operation. These fins 31 are linear in sense of not being curved and they extend perpendicularly to the base 15 of the water chamber 71 and vertically from the side walls 30 of the water chamber 71.

As can be seen in Fig. 13, the lower end of the fins 31 is flush with the base 35. In other words, the fins 31 do neither extend beyond the plane of the base 11 nor do the lower ends thereof have a distance to the base 35. Thus, the fins 31 extend from the base 11 towards the thread 14. In the present embodiment, the upper end of the fins 31 is approximately at the lowest point of the hole 32 for accommodating the valve 25. The fins 31 are arranged in a manner that the upper ends thereof do not interfere with the mounting of the valve 25. It is allowed to have longer fins that allow the mounting of the valve as shown in Fig. 27.

Further, the radial extent of the fins 31 linearly decreases from the lower end thereof, i.e. from the base 35, towards the upper end of the fins 31. In this embodiment, the radial extent of the fins 31 is zero at the upper end thereof but it could have a radial extent which is larger than zero but smaller than the radial extent of the lower end of the blade

### Third embodiment

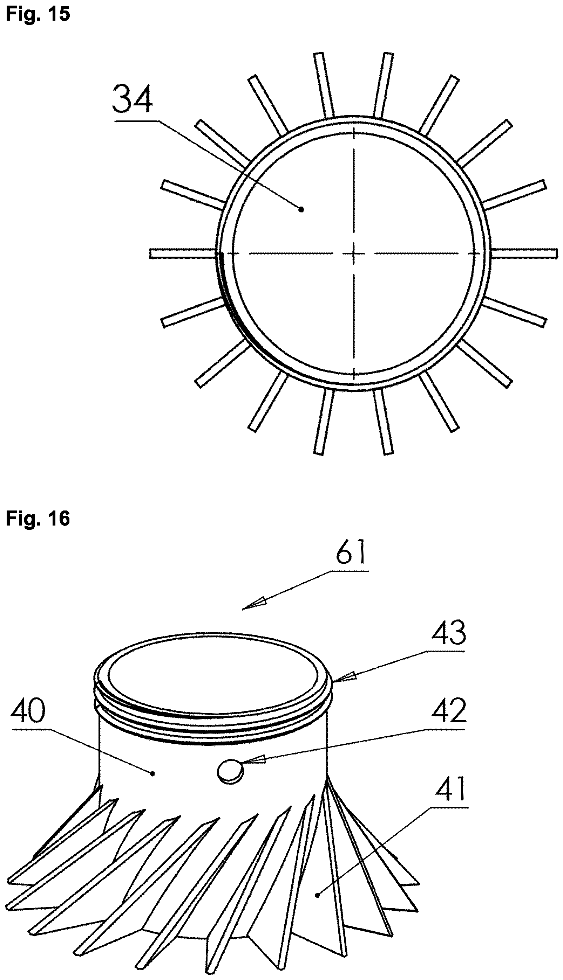

Fig. 16 to 19 show a second embodiment of a water chamber 61.

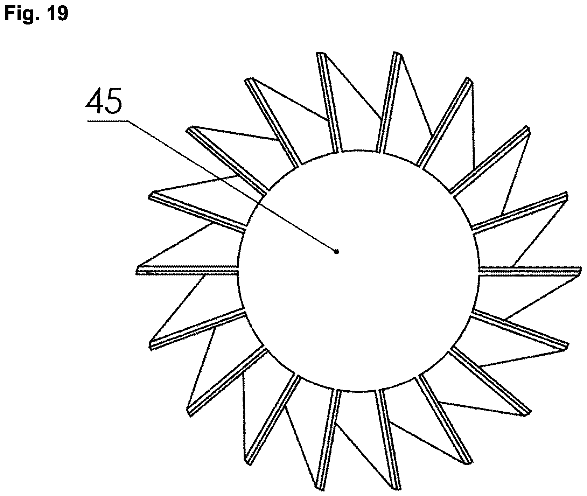

Making reference to Fig. 16, the water chamber 61 according to the third embodiment has a cylindrical body comprising a cylindrical side wall 40 and a circular base 45 (see Fig. 19). A thread 43 is provided on the top of the water chamber 61 to screw into a top part 22 (see Fig. 7) of the Moka coffee maker. A hole 42 is provided in the side wall 40 of the water chamber 61 for accommodating a pressure release valve 25 (see Fig. 8).

The water chamber 61 according to the third embodiment has fan style blades 41 added to the side walls 40 either by welding, casting, injection-molded or preferably extruded by a 5-axis machining operation. These linear blades spiral up and around the cylindrical side wall 40 of the water chamber 61.

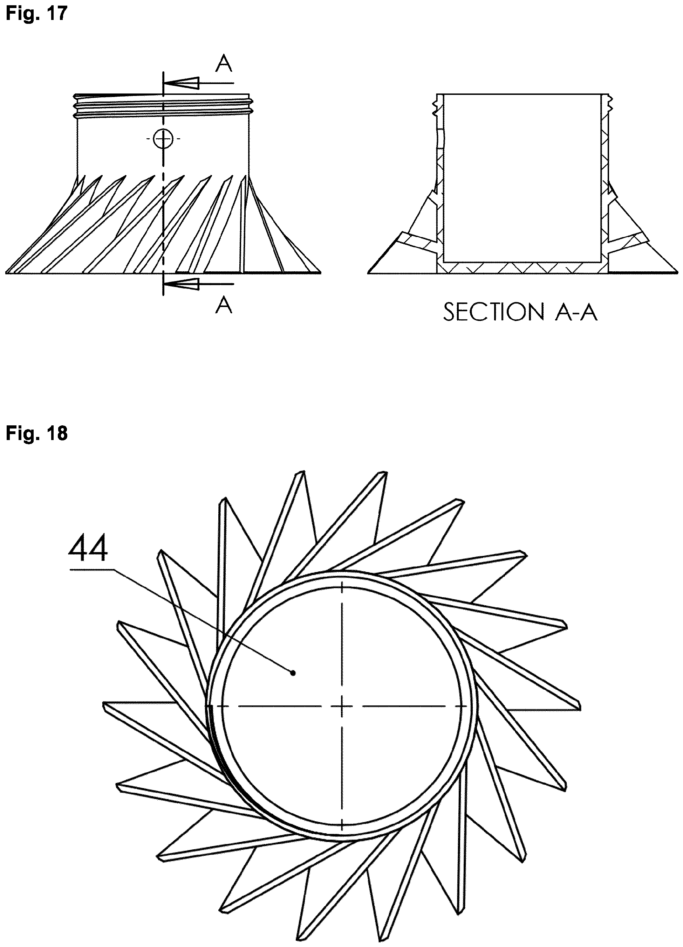

As can be seen in Fig. 17, the lower end of the blades 41 is flush with the base 45. In other words, the blades 41 do neither extend beyond the plane of the base 45 nor do the lower ends thereof have a distance to the base 45. Thus, the blades 41 extend from the base 45 towards the thread 43. In the present embodiment, the upper end of the blades 41 is approximately at the lowest point of the hole 42 for accommodating the valve 25. The blades are arranged in a manner that the upper ends thereof do not interfere with the mounting of the valve 25. It is allowed to have longer fins that allow the mounting of the valve as shown in Fig. 27.

Further, the radial extent of the blades 41 linearly decreases from the lower end thereof, i.e. from the base 45, towards the upper end of the blades 31.

### Fourth embodiment

Figs. 27 and 28 show a fourth embodiment of the present invention.

Making reference to Fig. 27, the water chamber 99 according to the fourth embodiment has a cylindrical body comprising a flat side walls 98 and an octagonal base. A thread is provided on the top of the water chamber 99 to screw into a top part 22 (see Fig. 7) of the Moka coffee maker. A hole is provided in one of the side walls of the water chamber 99 for accommodating a pressure release valve 25 (see Fig. 27). In this embodiment the fin where the pressure valve is present is shortened.

The water chamber 99 according to the fourth embodiment has fan style blades added to the side walls 98 either by welding, casting, injection moulded or preferably extruded by a 5-axis machining operation. These fan style blades are non-linear blades that spiral up and around the cylindrical water chamber 98.

The fan style blades each have a lower edge and an upper edge. Whilst not restricted to this feature, in this version the lower edge is slightly above the base of the water chamber 99, is substantially parallel to the plane of the base and has an extent in the radial direction although the lower edge might be inclined with respect to the radial direction of the water chamber. The upper edge is slightly below the thread of the water chamber 99, is substantially parallel to the plane of the base and has an extent in the radial direction although the upper edge might be inclined with respect to the radial direction of the water chamber. The radial extent of the upper edge is smaller than that of the lower edge. The blade has a curvature with a slope increasing from the lower edge towards the upper edge. Although this is not totally shown in the schematic drawing of Fig. 27, the hole for the valve is located between two adjacent blades in a manner that the valve can be screwed into the hole.

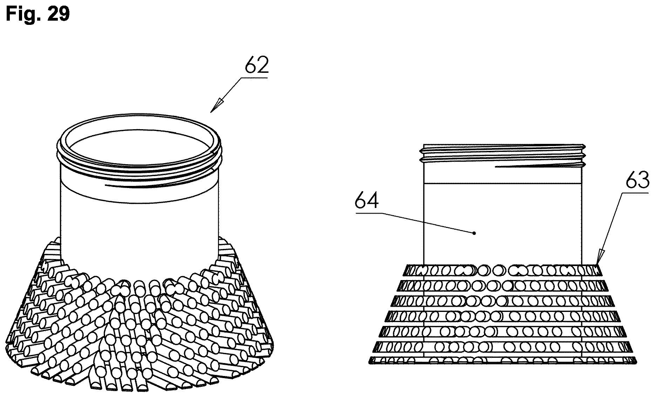

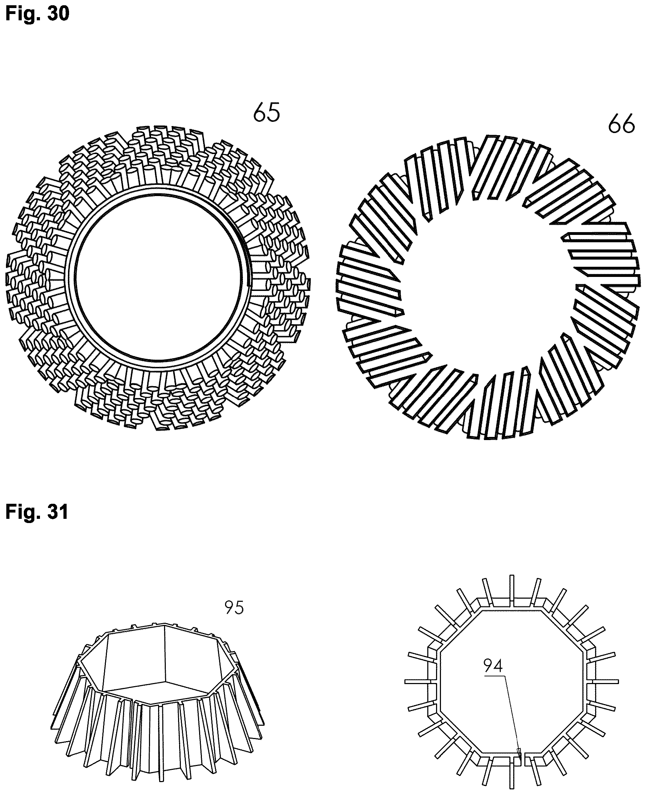

Figs. 29 and 30 show a fifth embodiment of the present invention.

Making reference to Fig. 29, the water chamber 62 according to the fourth embodiment has a cylindrical body comprising a cylindrical side wall 64 and a circular base. A thread is provided on the top of the water chamber 62 to screw into a top part 22 (see Fig. 7) of the Moka coffee maker. A hole (not shown) is provided in the side wall 64 of the water chamber 62 for accommodating a pressure release valve 25 (see Fig. 8).

The water chamber 62 according to the fifth embodiment has column- or coned style extrusions 63 added to the side walls 64 either by welding, casting, injection-molded or preferably extruded by a 5-axis machining operation. These non-linear blades spiral up and around the Polygonal shaped body of the water chamber (64).

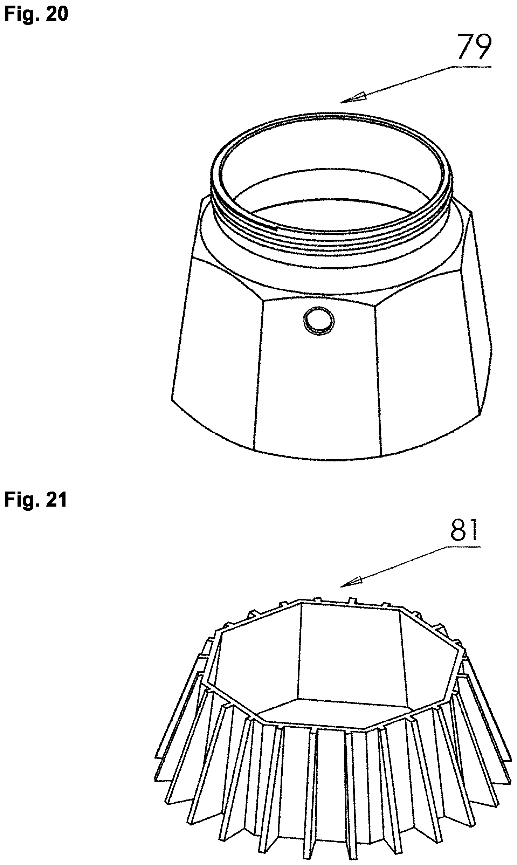

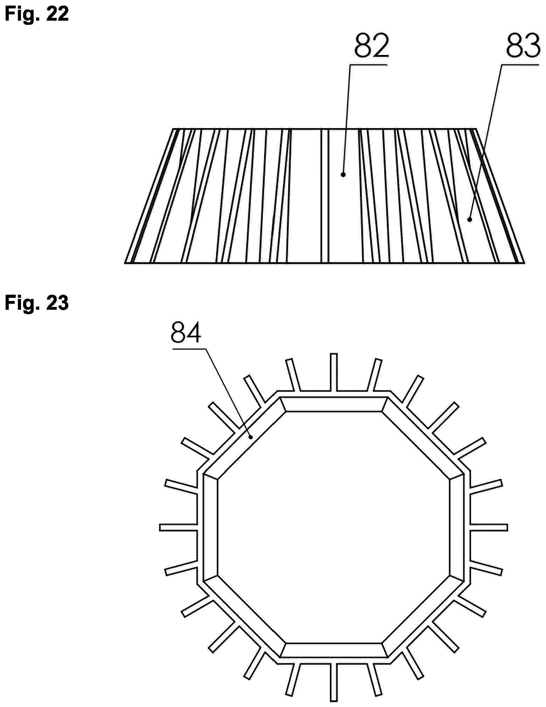

Figs. 22 to 26 show a sixth embodiment of the invention. Fig. 20 shows a conventional water chamber 79 having a cylindrical (octagonal) body comprising flat side walls and an octagonal base. A thread is provided on the top of the conventional water chamber 79 to screw into a top part 22 (see Fig. 7) of the Moka coffee maker. A hole is provided in one of the side walls of the water chamber 99 for accommodating a pressure release valve 25 (see Fig. 8).

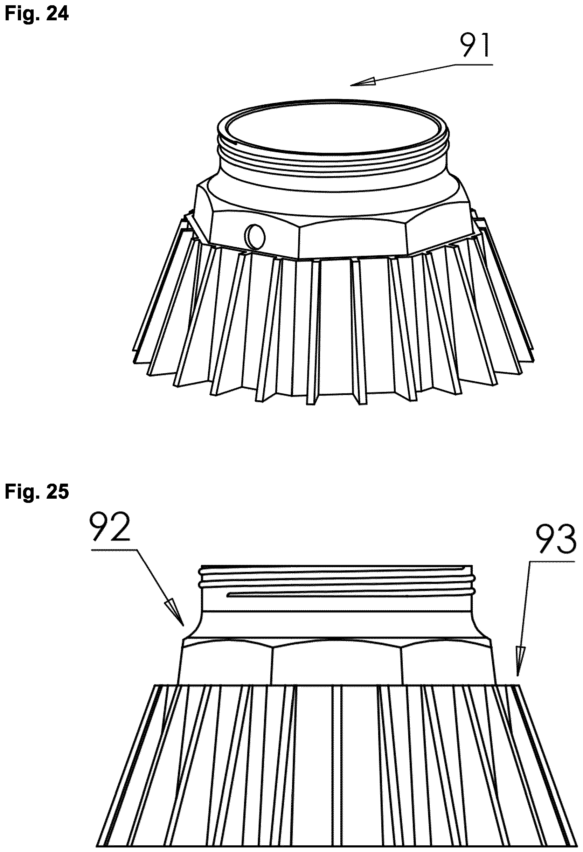

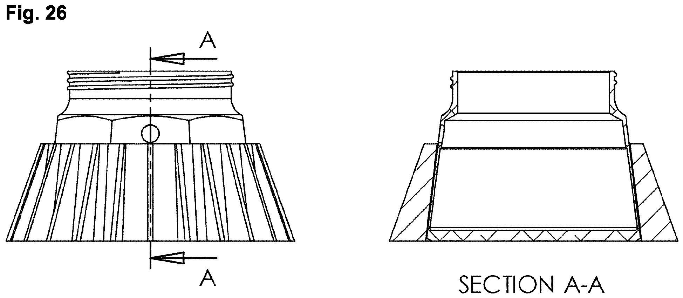

Figs. 21 to 23 show a sleeve adapted to be retrofit and slid over the conventional Moka coffee maker water chamber 79. The sleeve 81 has flat side walls 82 which fit to the side walls of the conventional water chamber 79 such that the sleeve 81 can be slid over the water chamber 79 in a manner that the side walls of the water chamber 79 and the side walls of the sleeve 81 come into surface contact for optimized heat transfer. The fitting of the sleeve 81 to the conventional water chamber 79 results in an assembly 91 as shown in Fig. 24. For fitting the sleeve 81 to the water chamber 79, the valve (not shown in Fig, 24) must be demounted such that only the hole is present. After obtaining the assembly 91 shown in Fig. 24, the valve can be mounted into the hole. For this purpose, there might be the need for mounting space between the lower part of the hole and the upper edge of the sleeve 81. The inner surfaces 84 (see Fig. 23) of the side walls of the sleeve 81are designed to fit over the outer walls fo the water chamber 79 as seen in Fig. 26. The scope of this embodiment is to provide users with fins that can be retrofitted to existing Moka coffee makers thus optimizing the design for heat absorption via convection. It is beneficial for the heat transfer to make the sleeve of this embodiment of a metal with higher thermal conductivity such as copper for polygonal (octagonal) or (circular) cylindrical base Moka coffee makers.

In the present embodiment, the conventional Moka coffee maker has an octagonal or circular cylindrical water chamber. However, the shape of the sleeve is not limited to fit to such conventional Moka coffee makers and it can have shape fitting to any other kind of Moka coffee makers.

Figs. 31 to 33 show eighth to tenth embodiments of the invention according to which three versions of the sleeve 95, 96, 85 where openings are included 94, 97, 86 that allow the sleeve to be slid over without having the remove the pressure valve.

In the eighth embodiment shown in Fig. 31, the sleeve 95 a slit-like opening 94 which extends substantially parallel to the fins. This slit-like opening allows the sleeve 95 to expand in the radial direction when being slid over a conventional water chamber. As a result, the slit gets larger in the circumferential direction such that the valve of the conventional water chamber can be placed in the slit-like opening.

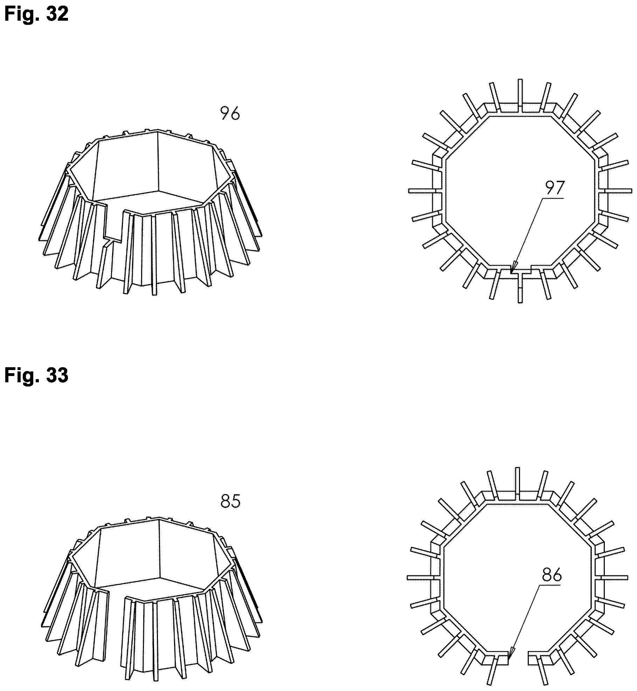

In the ninth embodiment shown in Fig. 32, the sleeve 96 has a rectangular-shaped opening 97 which start at the top side of the sleeve and extends towards the bottom thereof. In this embodiment, the opening 97 is provided in a manner that one of the fins are cut away. The circumferential width of the sleeve is large enough to accommodate a valve of a conventional water chamber. When the sleeve is fit over the conventional water chamber, the top of the conventional water chamber has a smaller diameter than the bottom side of the sleeve such that the valve will not collide with the inner wall of the sleeve. The length of the opening 97 is dimensioned such that, during the sliding movement of the sleeve over the conventional water chamber, the valve will enter the opening 97 without the colliding with the inner wall of the sleeve.

In the tenth embodiment shown in Fig. 33, the sleeve 85 has a slit-like opening 86 which extends substantially parallel to the fins. The circumferential width of the sleeve is large enough to accommodate a valve of a conventional water chamber without the need of expanding the sleeve in the circumferential direction. The valve can be guided in the slit-like opening 86 when the sleeve is fit over the conventional water chamber.

The fins or blades 15, 31, 41, 83 in the embodiments may have a thickness of about 2mm but these can change to more or less wide. The number of blades or fins that are present on the side walls of the water chamber can also change.

Blade or fin design, size and numbers present on the side wall of the water chamber can change based on thermodynamic principles, production costs and material costs.

## Claims

1. A water chamber (10, 40, 98) for a Moka coffee maker, the water chamber having a base and a side wall and comprising linear (41) or non-linear (15) blades that spiral up and around the side wall of the water chamber.

2. A water chamber (30) for a Moka coffee maker, the water chamber having a base and a side wall and comprising linear fins (31) that are perpendicular to the base of the water chamber and protrude radially from the side wall.

3. A water chamber (64) for a Moka coffee maker, the water chamber having a base and a side wall and comprising coned or column style protrusions (63) that protrude from the side wall and are arranged along a path that spirals up and around the side wall of the water chamber, wherein each protrusion is offset in a circumferential direction of the water chamber from the protrusion directly below it.

4. The water chamber (10, 40, 98; 30) for a Moka coffee maker according to claim 1 or 2, wherein the linear fins (31) or the linear (41) or non-linear (15) blades protrude from the side wall by at least 1 mm outwardly from the water chamber.

5. The water chamber (64) for a Moka coffee maker according to claim 3, wherein the coned or column style protrusion (63) protrude from the side wall by at least 1 mm outwardly from the water chamber.

6. The water chamber (10, 40, 98; 30; 64) for a Moka coffee maker according to any one of claims 1 to 5, further comprising a flat base, wherein the blades, fins or protrusions do not extend beyond a plane defined by the flat base of the water chamber.

7. The water chamber (10, 40, 98; 30; 64) for a Moka coffee maker according to any one of claims 1 to 6, further comprising a circular or polygonal cylindrical body that contains the water.

8. A sleeve adapted to be retrofit and slid over a non-finned Moka coffee maker water chamber (79), the sleeve having a side wall and comprising linear or non-linear blades that spiral up and around the side wall of the sleeve.

9. A sleeve (81, 95, 96, 85) adapted to be retrofit and slid over a non-finned Moka coffee maker water chamber (79), the sleeve having a side wall and comprising linear fins (83) that are perpendicular to the base of the water chamber and protrude radially from the side wall of the sleeve.

10. A sleeve adapted to be retrofit and slid over a non-finned Moka coffee maker water chamber, the sleeve having a side wall and comprising coned or column style protrusions that spiral up and around the side wall of the water chamber, wherein each protrusion is offset in a circumferential direction of the sleeve from the protrusion directly below it.

11. The sleeve according to claim 8 or 9, wherein the linear fins or the linear (83) or non-linear blades protrude from the side wall of the sleeve by at least 1 mm outwardly from the water chamber.

12. The sleeve according to claim 10, wherein the coned or column style protrusion (63) protrude from the side wall by at least 1 mm outwardly from the water chamber.

13. The sleeve (81) according to any one of claims 8 to 12, wherein the sleeve is made of a metal with higher thermal conductivity than the metal of the Moka coffee maker water chamber.

14. The sleeve (81) according to any one of claims 8 to 13, wherein the inner wall of the sleeves is in physical contact with the Moka coffee maker water chambers outer wall.

15. The water chamber according to any of claims 1 to 7 or the sleeve according to any of claims 8 to 14, wherein the outer surface of the water chamber or of the sleeve is at least 20% larger than the inner surface of the water chamber.

16. The sleeve according to any one of claims 8 to 15, further comprising an opening for accommodating a valve of the non-finned Moka coffee maker water chamber.
